# EUROPEAN PATENT APPLICATION

(11) **EP 1 990 702 A2**
(43) Date of publication of application: **12.11.2008**
(21) Application number: 08154605.3
(22) Date of filing: 16.04.2008
(51) Int. Cl.: G06F 1/16

(54) **Information processing apparatus**

(30) Priority: 11.05.2007 JP 2007126944
(71) Applicant: Kabushiki Kaisha Toshiba, Minato-ku, Tokyo 105-8001 (JP)
(72) Inventor: Nakamura, Toshikatsu Toshiba Corp. Intellectual Property Division, Tokyo 105-8001 (JP); Sakai, Akio Toshiba Corp. Intellectual Property Division, Tokyo 105-8001 (JP)
(74) Representative: Henkel, Feiler & Hänzel

(57) **Abstract**

An information processing apparatus includes an apparatus body (11) having a top wall (14b), a keyboard (13) disposed on the top wall of the apparatus body, a display unit (12) connected to the apparatus body and movable between a closed position such as to cover the top wall and an open position such that the top wall is exposed, and a first control device (34) and a second control device (36) of the same shape disposed individually on the left- and right-hand sides of the keyboard on the top wall of the apparatus body.

## Description

The present invention relates to an information processing apparatus provided with a keyboard.

In recent years, portable computers called notebook personal computers or mobile computers have been widely spread and used as information processing apparatuses. One such computer is generally provided with a flat, substantially rectangular apparatus body and a display unit that is rotatably mounted on the top surface of the apparatus body. The apparatus body contains therein a printed circuit board on which a large number of electronic components are mounted, a hard disk drive as an information recording device, an optical disc drive, etc.

A keyboard for use as input means is disposed on the top surface of the apparatus body, and a pointing device, such as a touch pad that is used to move a cursor on a display, is located near the keyboard. For example, an apparatus that is provided with a numeric keypad or some other input keys on one side portion of a keyboard is proposed in Jpn. Pat. Appln. KOKAI Publication No. 2001-306224. In a processor proposed in Jpn. Pat. Appln. KOKAI Publication No. 2000-227832, moreover, a jog dial is incorporated in one end portion of a keyboard.

Modern computers deal with various types of media, such as animation data, TV shows, still pictures, games, Internet content, etc., as well as music data. In handling many types of media, a user must instruct a computer to perform various functions. In processing image data, for example, a conventional computer requires the user to manipulate the jog dial or touch panel with one hand while operating the keyboard with the other hand, so that the operability of the computer is low. Thus, there is a demand for a control device that can be operated more smoothly.

Further, display units have recently been increased in size and area and become greater than keyboards. Usually, the apparatus body is formed having the same width as the display unit and configured so that its entire surface is opposed to the display unit when the display unit is closed. In this case, spaces are formed around the keyboard on the top surface of the apparatus body, and they are expected to be utilized effectively.

The present invention has been made in consideration of these circumstances, and its object is to provide an information processing apparatus which ensures high operability and space efficiency.

According to an aspect of the invention, there is provided an information processing apparatus characterized by comprising: an apparatus body including a top wall; a keyboard disposed on the top wall of the apparatus body; a display unit connected to the apparatus body and movable between a closed position such as to cover the top wall and an open position such that the top wall is exposed; and a first control device and a second control device of the same shape disposed individually on the left- and right-hand sides of the keyboard on the top wall of the apparatus body.

According to the invention, there can be obtained an information processing apparatus which ensures high operability and space efficiency.

The invention can be more fully understood from the following detailed description when taken in conjunction with the accompanying drawings, in which:
FIG. 1 is a perspective view showing an outline of a computer according to an embodiment of the invention;
FIG. 2 is a perspective view showing the bottom side of the computer;
FIG. 3 is a plan view showing an AV controller disposed on a top wall of a body of the computer; and
FIG. 4 is a plan view showing a front control panel disposed on the top wall of the computer body.

An embodiment of the present invention will now be described with reference to the accompanying drawings.

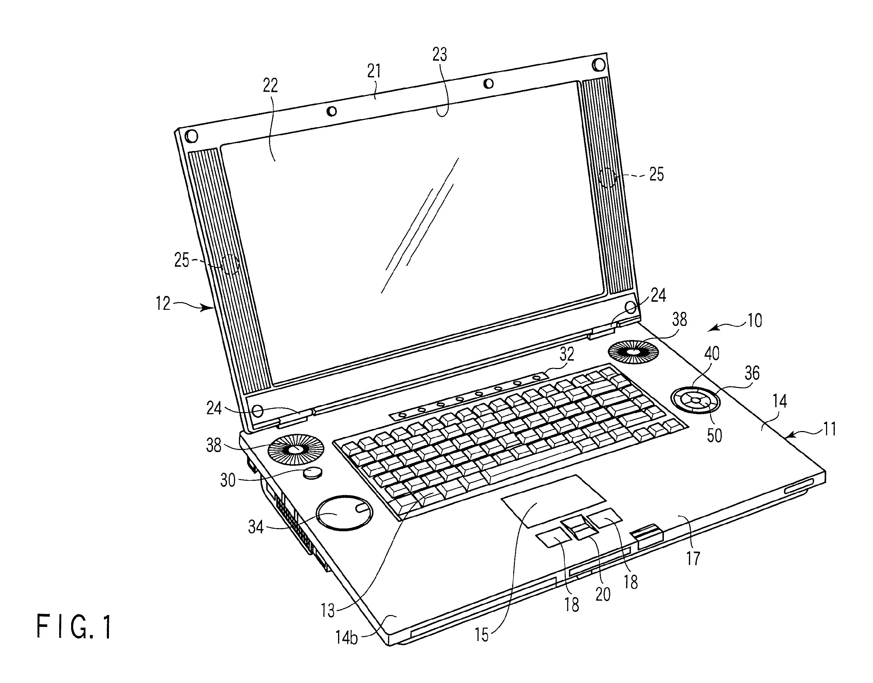

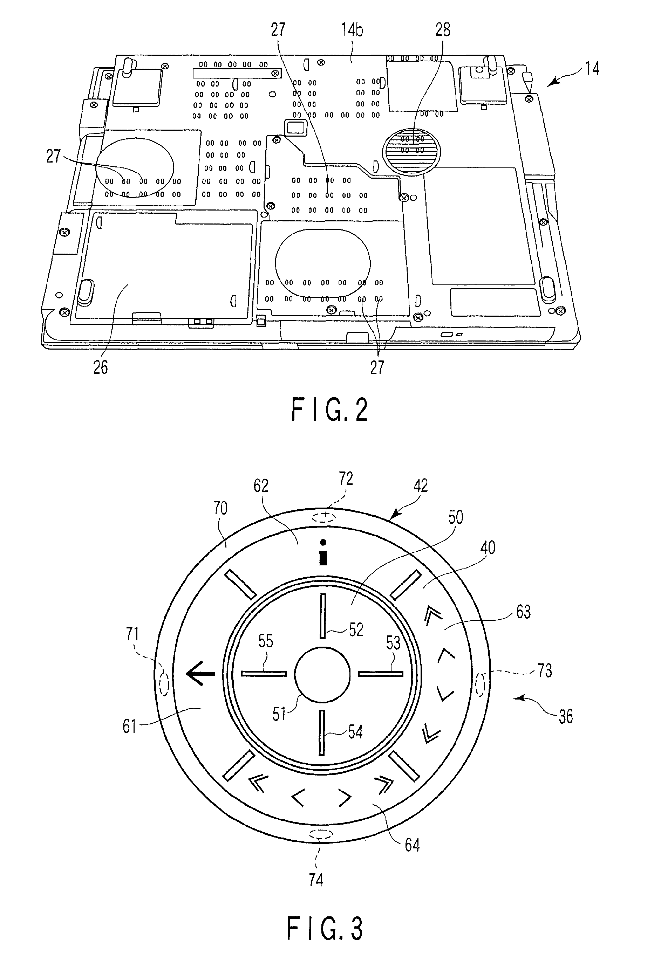

FIGS. 1 and 2 show an information processing apparatus according to an embodiment of the invention. This information processing apparatus is realized as a notebook portable computer 10 that can be driven by a battery, for example.

FIG. 1 is a perspective view showing a display unit of the computer 10 in an open state, and FIG. 2 is a perspective view showing the bottom side of the computer. As shown in FIG. 1, the computer 10 is provided with an apparatus body 11 in the form of a flat rectangular box and a flat rectangular display unit 12. The apparatus body 11 includes an enclosure 14 that is formed of a synthetic resin, for example. The enclosure 14 is provided with a rectangular bottom wall 14a, left- and right-hand side walls, a front wall, a rear wall, and a rectangular top wall (top cover) 14b opposed to the bottom wall. The side, front, and rear walls are set up integrally around the bottom wall.

The display unit 12 is provided with a housing 21 in the form of a flat rectangular box and a liquid crystal display panel 22 held in the housing. The display panel 22 is formed as, for example, a 17-inch-wide screen, of which a display surface is exposed to the outside through a display window 23 in the housing 21. The housing 21 has a pair of leg portions 24 protruding from its one end portion. These leg portions 24 are rockably supported on the rear end portion of the enclosure 14 by hinge portions (not shown). Thus, the display unit 12 is rotatable between a closed position in which it is brought down to cover the top wall 14b of the enclosure 14 from above and an open position in which it stands behind the top wall 14b.

The display unit 12 includes a pair of tweeters 25, which are disposed in the housing 21 and situated individually on the left- and right-hand sides of the liquid crystal display panel 22. In the present embodiment, the tweeters 25 are situated bilaterally symmetrically with respect to the center of the liquid crystal display panel 22.

An optical disc drive, a hard disk drive (HDD), a card slot, and various other electronic components (not shown) are arranged in the apparatus body 11. As shown in FIG. 2, a large number of air vents 27 are formed in the bottom wall 14a of the enclosure 14. A battery pack 26 is removably attached to the bottom wall 14a of the enclosure 14. In the enclosure 14, moreover, a subwoofer 28 is disposed on the bottom wall 14a.

As shown in FIG. 1, a substantially rectangular keyboard 13 is disposed on the central part of the top wall 14b. The keyboard 13 is located in a manner such that its long sides extend substantially parallel to those of the top wall 14b. The keyboard 13 is provided with a plurality of keys, including ones for four directions, upper, lower, leftward, and rightward, and various other keys (alphabetic keys, numeric keys, auxiliary keys, etc.). The front end portion of the top wall 14b constitutes a palm rest area 17. A touch pad 15 as a pointing device, touch pad control buttons 18, and a fingerprint sensor 20 are arranged substantially in the center of the palm rest area.

On the top wall 14b, the keyboard 13 is surrounded by a power button switch 30 for switching the computer 10 on and off, a front control panel 32, a volume control dial 34, an audio/video (AV) controller 36, a pair of main speakers 38, etc.

The computer 10 has an AV function to reproduce various media, such as TV shows, animation data, still pictures, music, etc. The front control panel 32 is formed having an elongate rectangular shape behind the keyboard 13 on the top wall 14b so that it extends along a long side of the keyboard. The control panel 32 is provided with a plurality of buttons for controlling the AV function of the computer 10. Each of these buttons is composed of a so-called touch-type electrostatic switch. An LED light transmitting portion is located in the center of each electrostatic switch. Light from an LED disposed corresponding to each electrostatic switch is emitted to the outside through its corresponding LED light transmitting portion.

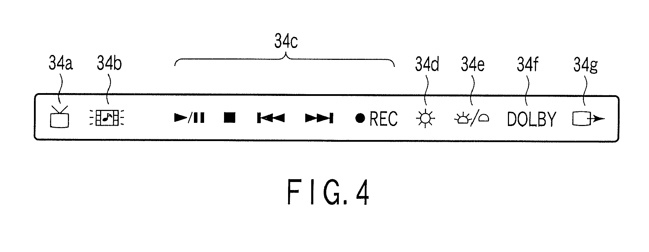

As shown in FIG. 4, a group of buttons on the front control panel 32 includes a TV button 34a, CD/DVD button 34b, player control buttons 34c, display luminance adjusting button 34d, LED on/off button 34e, audio function indicator button 34f, TV-out button 34g, etc. The TV button 34a indicates activation of the TV function for watching or recording TV shows. The CD/DVD button 34b indicates activation of a CD/DVD function for reproducing content stored on CD or DVD media. The player control buttons 34c are used to control the playback, stop, fast-forward, video recording, and other operations of a CD/DVD player. The LED on/off button 34e as an on/off panel serves for on/off control of LEDs in the front control panel 32 and LEDs arranged in the AV controller 36, which will be described below.

On the top wall 14b, as shown in FIG. 1, the volume control dial 34 and the AV controller 36 are disposed on the left- and right-hand sides, respectively, of the keyboard 13, that is, on the longitudinally opposite sides of the keyboard in this case. The volume control dial 34 and the AV controller 36, which function as first and second control devices, respectively, are formed having the same size and the same shape, e.g., a circular shape.

At the rear end portion of the top wall 14b, the main speakers 38 are located exposed on the left- and right-hand sides of the keyboard 13, individually. The speakers 38 are formed substantially having the same size and the same shape, i.e., the circular shape, as the volume control dial 34 and the AV controller 36.

The volume control dial 34 and the AV controller 36 are arranged bilaterally symmetrically with respect to the keyboard 13. Likewise, the pair of main speakers 38 are arranged bilaterally symmetrically with respect to the keyboard 13. Further, the power button switch 30 is located beside the keyboard 13 and between the volume control dial 34 and one of the main speakers 38.

The circular volume control dial 34 is rotatably located on the enclosure 14. It serves to control the audio volume and play back an image displayed on the display unit 12 frame by frame by rotating.

As shown in FIG. 3, the AV controller 36 is a control device for controlling the AV function and the like of the computer 10. It is supported in the enclosure 14 and exposed on the top wall 14b. The AV controller 36 is provided with an electrostatic pad device 40, a circular push-button switch portion 50, and an annular illumination device 42. The pad device 40 has an annular touch sensing area. The switch portion 50 is located in the center of the pad device. The illumination device 42 is disposed along the circumference of the pad device 40.

The push-button switch portion 50 is provided with a plurality of push buttons, e.g., an OK button (enter button) 51 and four direction buttons (arrow buttons) 52, 53, 54 and 55.

The touch sensing area of the electrostatic pad device 40 includes a pad portion and an electrostatic sensor. The pad portion functions as a sensing area. The electrostatic sensor detects the positions (touch positions) of a user's fingers on the touch sensing area of the pad portion based on changes of capacitance. An operation of the user to touch the touch sensing area with fingers is called a touch operation.

The touch sensing area is divided into four areas 61, 62, 63 and 64 that are arranged side by side in its circumferential direction. These four areas 61, 62, 63 and 64 are input areas (for the user's touch operation) with which different functions are associated individually.

The area 61 is associated with a "RETURN" function that instructs a group of software, such as AV software, to return to an immediately preceding display item. The area 62 is associated with a "MORE INFO" function that instructs the software group to display more detailed information associated with display items. The area 63 is associated with a first "FAST MOVE BUTTON" for moving a controlled object position or a cursor on a display screen in a vertical (upward or downward) direction. The area 64 is associated with a second "FAST MOVE BUTTON" for moving the controlled object position or the cursor on the display screen in a horizontal (leftward or rightward) direction.

The illumination device 42 around the electrostatic pad device 40 includes four light emitting diodes (LEDs) 71, 72, 73 and 74, which are disposed adjacent to the four areas 61, 62, 63 and 64, respectively, in the pad device. Each of the four LEDs 71, 72, 73 and 74 is turned on or off in response to the touch operation on its corresponding area. The four LEDs 71, 72, 73 and 74 are located on the outer peripheral side of the annular touch sensing area of the electrostatic pad device 40, for example. An annular LED light transmitting portion 70 is located on the outer peripheral side of the touch sensing area. The four LEDs 71, 72, 73 and 74 that correspond to the four areas 61, 62, 63 and 64, respectively, are located on the underside of the light transmitting portion 70. Light from each LED is emitted to the outside through the annular light transmitting portion 70.

The user can input a group of commands for instructing the AV software to execute various functions by only operating the electrostatic pad device 40 and the push-button switch portion 50 in the AV controller 36 with one hand without operating either the keyboard 13 or the touch pad 15. For example, the user can input the command group for the execution of the various functions by operating the AV controller 36 and the volume control dial 34 with his/her right and left hands, respectively, without operating either the keyboard 13 or the touch pad 15. Thus, the operability can be improved.

As shown in FIG. 1, on the other hand, the pair of tweeters 25 attached to the display unit 12 are situated in positions such that they never overlap the main speakers 38 on the apparatus body 11 side when the display unit 12 is moved to the closed position. Further, the tweeters are situated in positions such as to overlap the volume control dial 34 and the AV controller 36, individually, when the display unit 12 is in the closed position. Thus, even when music is played back with the display unit 12 closed, audio interference between the tweeters 25 and the main speakers 38 can be prevented to achieve satisfactory music playback.

If the tweeters 25 are attached to the display unit 12, they never fail to be located opposite the user when an audio output is delivered with the display unit opened. Since the tweeters 25 generally have high directivity, their face-to-face orientation to the user optimizes the sound quality. The sound quality is improved, moreover, since the tweeters 25 and the main speakers 38 are spaced wide apart. Further, the sound quality cannot be lowered if the subwoofer 28 that outputs a low-pitched sound is disposed on the bottom wall of the enclosure 14.

According to the portable computer 10 constructed in this manner, the commands for the execution of the various functions can be input for various types of media, such as animation data, TV shows, still pictures, games, Internet content, etc., as well as music data, by operating the volume control dial and the AV controller on the left- and right-hand sides of the keyboard, without using the keyboard, touch pad, or the like. Thus, the operability can be improved.

The volume control dial and the AV controller are formed having the same shape and arranged bilaterally symmetrically. Therefore, the left- and right-hand control devices can be simultaneously operated without incompatibility, so that the operability can be further improved.

The volume control dial, AV controller, and main speakers are located in spaces on the left- and right-hand sides of the keyboard on the top wall of the enclosure. If the enclosure is increased in size with the increase in size and area of the display unit, therefore, the spaces around the keyboard can be utilized effectively. Since the volume control dial, AV controller, and main speakers are formed having the same shape and substantially the same size, moreover, the design performance of the apparatus can be improved. The top wall of the enclosure should only be formed with circular holes of the same shape in which the volume control dial, AV controller, and main speakers can be set, so that manufacturing processes can be simplified.

Thus, there may be obtained an information processing apparatus that ensures high operability and space efficiency.

For example, the present invention is not limited to portable computers, but is also applicable to some other information processing apparatuses. The first and second control devices are only expected to be formed having the same shape and may be of any shape other than a circular one. Further, the first and second control devices may be interchanged in lateral position with respect to the keyboard. The first control device may be configured to realize some functions other than the volume control and the frame-by-frame playback.

## Claims

1. An information processing apparatus **characterized by** comprising:
an apparatus body (11) including a top wall (14b);
a keyboard (13) disposed on the top wall of the apparatus body;
a display unit (12) connected to the apparatus body and movable between a closed position such as to cover the top wall and an open position such that the top wall is exposed; and
a first control device (34) and a second control device (36) of the same shape disposed individually on the left- and right-hand sides of the keyboard on the top wall of the apparatus body.

2. The information processing apparatus according to claim 1, **characterized by** further comprising a pair of main speakers (38) which have the same shape as the first and second control devices (34, 36), and are exposed on the top wall (14b) of the apparatus body (11) and situated individually on the left- and right-hand sides of the keyboard (13).

3. The information processing apparatus according to claim 2, **characterized in that** the display unit (12) includes a display (22) and a pair of tweeters (25) disposed individually on the left- and right-hand sides of the display.

4. The information processing apparatus according to claim 3, **characterized in that** the pair of tweeters (25) are situated in positions such as not to overlap the main speakers (38) when the display unit (12) is moved to the closed position.

5. The information processing apparatus according to claim 3 or 4, **characterized in that** the pair of tweeters (25) are situated in positions such as to overlap the first and second control devices (34, 36), individually, when the display unit (12) is moved to the closed position.

6. The information processing apparatus according to claim 3, **characterized in that** the apparatus body (11) includes a bottom wall (14a) opposed to the top wall (14b), and **characterized by** further comprising a subwoofer (28) located on the bottom wall of the apparatus body.

7. The information processing apparatus according to claim 1, **characterized in that** the first control device (34) and the second control device (36) are circular.

8. The information processing apparatus according to claim 7, **characterized in that** the first control device (34) is disposed for rotation and includes a control dial for controlling an audio volume and playing back a displayed image frame by frame.

9. The information processing apparatus according to claim 1 or 2, **characterized in that** the first control device (34) and the second control device (36) are arranged bilaterally symmetrically with respect to the keyboard (13).

10. The information processing apparatus according to claim 2, **characterized in that** the pair of main speakers (38) are arranged bilaterally symmetrically with respect to the keyboard (13).

11. The information processing apparatus according to claim 1, **characterized by** further comprising an excessive illumination device (42) disposed along the circumference of the second control device (36) and a front control panel (32) disposed behind the keyboard (13) on the top wall (14b) of the apparatus body (11), the front control panel including a touch-type on/off panel for switching the illumination device on and off.
